# EUROPEAN PATENT APPLICATION

(11) **EP 1 188 527 A2**
(43) Date of publication of application: **20.03.2002**
(21) Application number: 01307840.7
(22) Date of filing: 14.09.2001
(51) Int. Cl.: B27C 1/14

(54) **Composite material platen for portable wood working machine**

(30) Priority: 14.09.2000 US 232402; 13.09.2001 US 952182
(71) Applicant: Black & Decker Inc., Newark Delaware 19711 (US)
(72) Inventor: DiLaura, Karen M, Baltimore, Maryland 21239 (US); Hurn, Richard, Bel Air, Maryland 21014 (US); Nickels Jr, Richard C., Hampstead, MD 21074 (US)
(74) Representative: Dlugosz, Anthony Charles

(57) **Abstract**

A platen for supporting a wooden workpiece relative to cutting heads of a planing machine, said platen having an upper surface and a lower surface and said platen being integrally composed of a fiber reinforced composite material.

## Description

The present invention generally relates to woodworking tools. More particularly, the present invention relates to portable wood working tools having a flat surface over which the wooden workpiece glides relative to the tool or vice versa.

Various power tools are used in woodworking to efficiently and accurately cut workpieces to desired dimensions and surface quality. For example, in planing machines one or more rotationally mounted blades are carried on the underside of a carriage assembly adjacent to a selectively adjustable workpiece opening. Generally, the carriage assembly of a wood planing machine is movably mounted for movement with respect to a workpiece supporting base or platen. Alternatively, however, it is known to fixedly mount the carriage assembly and move the base or platen vertically with respect to the carriage assembly. In use, a workpiece is passed through the workpiece opening and a predetermined amount of material is removed from the surface of the workpiece adjacent to the carriage assembly. As with other woodworking operations, it is desirable that the planing machine accomplishes workpiece preparation with precise tolerances, high surface quality, and a significant degree of reproducible results. As a workpiece is passed through the workpiece opening, it is important that the carriage assembly remain vertically fixed with respect to the support platen. Slight movement of the carriage assembly or of the workpiece negatively impacts the quality of the cut. Because the weight of wooden workpieces can be significant, the platen or base must be sufficiently strong and stiff to support the weight and maintain the alignment of the workpiece. The platen or base must also stay true over the life of the tool since bends or bumps could cause the workpiece to move or twist during planing. Other tools with similar requirements include stationary band saws and scroll saws, where the work piece slides over a platten or table to engage the tool blade.

Similarly, there are a variety of portable hand tools that slide over the workpiece on a shoe or platen. Such tools include circular saws and jig saws. In these tools the motor and transmission structures are mounted to a top side of the shoe or platten, while a portion of a blade protrudes through an opening in the shoe. In such tools, irregularities in the platen can twist the tool in the operator's hand and cause the blade to deviate from the intended line of cutting.

Because of the need for strength and stiffness, shoes and plattens incorporated in prior art planers and hand tools have been manufactured of metal such as steel or aluminum. They are, as a result, relatively heavy parts of the tool. The weight of a metal platen or shoe significant reduces the mobility and therefore the utility of portable albeit stationary worksite tool such as a power planer. In hand held power, such as a circular saw, the added weight contributes to operator fatigue and inaccuracy.

Furthermore, the mass of metal of a platen can aggravate vibrations produced by the blade driving mechanism. This is particularly true in tools employing a reciprocating blade driving means. The vibration of the platen may reduce the planing and cutting precision of the machine and may make intricate cuts impossible. Indeed, in some reciprocating machines counterbalancing mechanisms are employed to damp out the vibrations, but such counterbalancing mechanisms add weight, complexity and cost to the tool.

Moreover, although cheap and relatively easy to produce, flat metal bases, platens and shoes tend to deform under impact loads. When dropped or struck with any substantial force, damage is not limited to the point of contact. Rather, the metal transmits the shock energy throughout the structure, frequently bending the platen or shoe. The wooden workpiece can not slide evenly over a deformed platen, put twists or pitches over the bend, making precise planing impossible. This type of damage is even more common for hand portable tools, such as a circular saw, where a deformed platen or shoe will not slide smoothly over the wooden workpiece. Rather, it may twist or turn in the operator's hand, causing the blade to deviate from the intended cutting line.

In those applications where strength is less important and weight or non-marring qualities more important, tool shoes and plattens have been manufactured from plastics. Alternatively, where it is necessary to combine the best characteristics, tools have been manufactured wherein the shoe has been divided into an assembly comprised of an upper metal structural element and a lower plastic or composite material non-marring workpiece contact element. This has been seen in jig saws, which, because of their use as finishing tools, require a non-marring contact surface. See, for example, US Patent No. 4,730,397. The use of two separate elements made of different materials, however, adds to the complexity and manufacturing cost of such tools.

Such plastic components are cheap and light weight. Unfortunately, plastic shoes, tables, and platens are not structurally tough. When subjected to a severe blow or when dropped their mode of failure is to crack rendering the tool useless until the shoe can be replaced. Additionally, when in use, plastics and some composite materials are subject to detrimental heat induced effects. Planers and circular saws can generate sufficient heat from cutting the wooden workpiece to induce short term and long term heat damage to simple plastics and some composite materials. Short term damage can include warping and even melting. Long term damage can include heat induced creep - a slow permanent change in material size or deformation due to a combination of heat and material stress.

According to the present invention, a power tool is provided with a platen or shoe made substantially of a fiber reinforced composite material. In one embodiment, a portable wood planing machine is described which includes a base or platen constructed of strong lightweight fiber reinforced composite material. In a second embodiment, a circular saw is described which includes a shoe constructed of strong lightweight fiber reinforced composite material.

The material of the platen or shoe is preferably constructed of thermoset resin with fiber reinforcement. For example, such a platen may be manufactured using a glass fiber reinforced vinyl ester thermoset sheet molding compound (SMC). Alternative fiber reinforcements include aramid and carbon fibers. Alternative base resins include epoxy, polyester, phenolic, polyurethane and polybutadiene resins. Variations on these composite materials and the manufacturing processes employing them are well known in the art. See for example, US patent No. 6,038,953.

The use of lightweight fiber reinforced composite materials to construct the platen or shoe of the present invention substantially reduces the weight of that component relative to the weight of a comparably sized metal platen or shoe. The overall weight of a portable tool incorporating such a composite material base or platen is also lightened, improving the mobility, ease of use and accuracy of the tool.

A lightweight composite material platen does not aggravate vibration problems in a planer or saw. Furthermore, composite materials are non marring. Softer that metals, they do not drag on or gouge the workpiece surface. Additionally, a composite material is also corrosion resistant.

Another important advantage of a platen, table or shoe made of composite material is that it provides better resistance to impact damage. Unlike metals or plastics, it does not bend or crack under shock loads. If a tool with such a platen is dropped and the platen takes the impact, the resin and fiber matrix may exhibit some localized breakdown or crumbling. If that damage interferes with smooth and even passage of the wooden workpiece, the damaged spot can be easily smoothed out with a file or grinder, unlike a bent metal platen or shoe, which can not be straightened, or unlike a cracked plastic shoe, which would have to be replaced.

A fiber reinforced composite material platen is more costly to produce then a metal or plastic one. Manufacturing costs for these materials have come down, but remain above those of conventional materials. In addition to the functional advantages discussed above, however, there are manufacturing advantages to the use of fiber reinforced composite materials. A platen of composite material can be molded so as to integrate some of the incidental elements needed for mounting the platen to the tool assembly or for increasing the structural stiffness of large flat components. For example, in a circular saw the bevel angle adjustment quadrant can be formed as an integral part of a fiber reinforced composite material shoe. Depending on the prior art material used - steel, aluminum, magnesium or plastic - such elements are sometimes separate metal parts. For another example, in a jig saw that might have previously combined a cast metal structural element and plastic sub-base, inventory and assembly of the complete tool can be simplified with attendant cost savings.

Additional objects and advantages of the present invention will become apparent from a reading of the following detailed description of the preferred embodiments which makes reference to the drawings of which:
Figure 1 is a perspective view of a portable wood planing machine constructed in accordance with an embodiment of the present invention illustrating a workpiece such as a wooden board in broken lines partially inserted between the carriage assembly and platen of the planing machine;
Figure 2 is an exploded perspective view of various elements of the portable wood planing machine of FIG. 1, generally associated with the upper portion thereof;
Figure 3 is an exploded perspective view of various elements of the portable wood planing machine of FIG. 1, generally associated with the lower portion thereof;
Figure 4 is top view of the platen of FIG. 1;
Figure 5 is a bottom view of the platen of FIG. 1;
Figure 6 is a perspective view of a circular saw including a shoe according to the present invention;
Figure 7 is a partially cut away side view of the circular saw of FIG. 6;
Figure 8 is a top view of the saw shoe of FIG. 6;
Figure 9 is a bottom view of the saw shoe of FIG. 6; and
Figure 10 is a front side view of the saw shoe of FIG. 6.

As required, detailed embodiments of the present invention are disclosed herein. However, it is to be understood that the disclosed embodiments are merely exemplary of the invention, which may be embodied in various forms. Therefore, specific functional and structural details disclosed herein are not to be interpreted as limiting, but merely as a basis for the claims and as a representative basis for teaching one skilled in the art to variously employ the present invention in virtually any appropriately detailed structure.

The present invention provides an improved base or platen or table or shoe along which a wood workpiece may move relative to a power tool or vice versa. One embodiment of the present invention provides a fiber reinforced composite material base or platen for a portable wood planing machine for the surface planing of a workpiece such as a wooden board or plank. A second embodiment of the present invention provides a fiber reinforced composite material shoe for a hand portable circular saw for gliding over and cutting a workpiece such as a wooden board or plank. The various features of such a base or platen or shoe, which are described in detail below, are shown cooperatively arranged within a the exemplary planing machine and circular saw. However, it will be appreciated that the scope of the present invention is not so limited. In other words, while the exemplary embodiments of a planing machine and circular saw with a composite material platen or shoe are shown and described, it will be understood that a similar composite material base, platen or shoe may be used in other power tool applications.

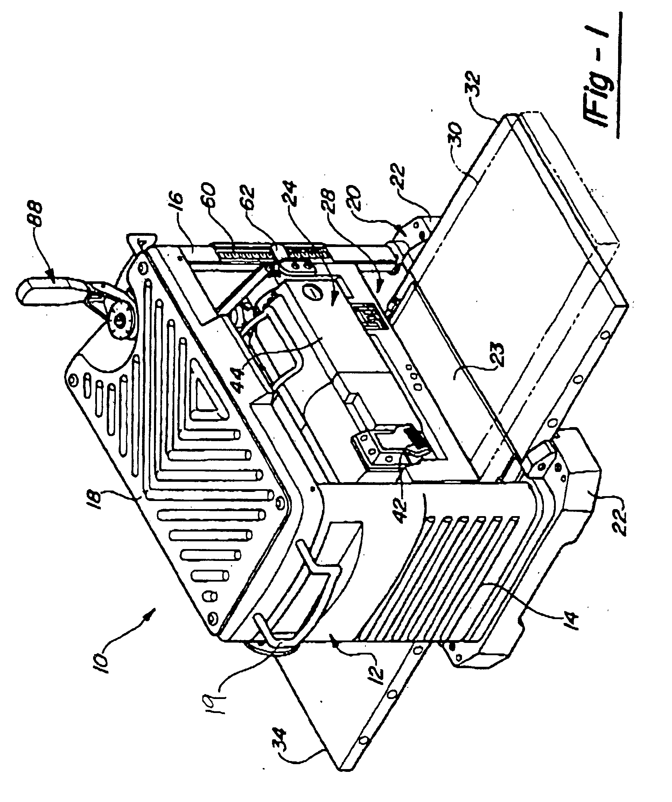

Turning generally to the drawings in which identical or equivalent elements have been denoted with like reference numerals and specifically to Figures 1 through 3 thereof, an exemplary wood planing machine constructed in accordance with the teachings of the present invention is illustrated and identified generally at reference numeral 10.

The planing machine 10 is shown to generally include a frame 12 having a pair of opposing sides 14 and 16, a top 18 and a base 20. The base 20 includes a plurality of support feet 22 and a workpiece support surface or platen 23. The planing machine 10 is also shown to include a carriage assembly 24 having an integrally formed casting 26. The carriage assembly 24 and the base 20 cooperate to define a workpiece opening 28 for receiving a workpiece 30. In one application, the workpiece opening 28 of the portable wood planing machine 10 is sized to accommodate a workpiece having a nominal width of twelve and one-half inches or less. The planing machine 10 also includes forwardly extending and rearwardly extending feed tables 32 and 34 for further supporting the workpiece 30. The forwardly and rearwardly extending feed tables 32 and 34 are upwardly foldable from their positions shown in FIG. 1 to storage positions substantially adjacent the front and rear of the planing machine 10, respectively. Transfer of the portable planing machine 10 is facilitated through a pair of carry handles 19 extending from opposing sides of the top 18. In FIG. 1, the workpiece 30 is shown in broken lines partially extending within the workpiece opening 28.

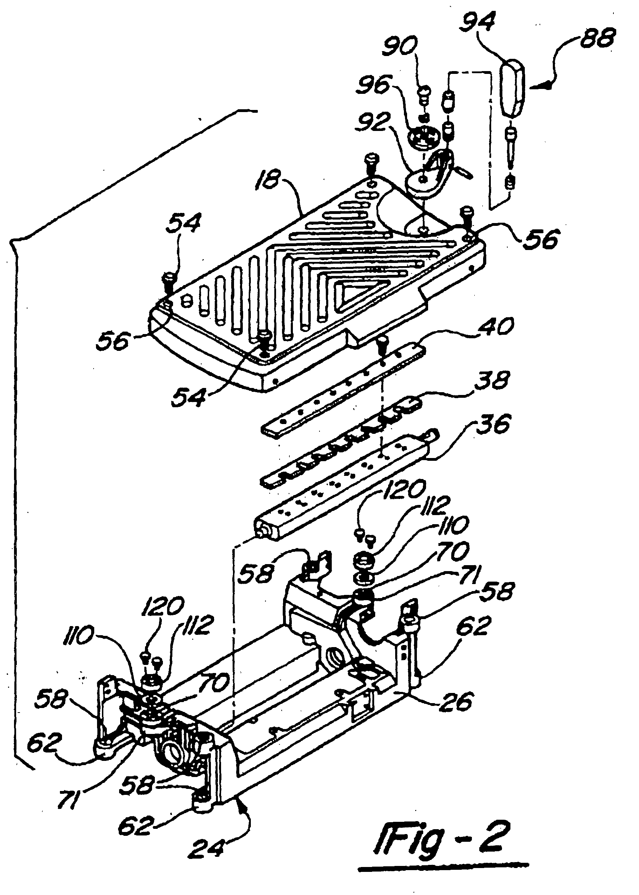

As shown in the exploded view of FIG. 2, a cutter head 36 is carried by the carriage assembly 24 such that it is exposed adjacent to the underside of the carriage assembly 24 which is adjacent the workpiece opening 28. The carriage assembly 24 also carries a pair of feed rollers (not shown). Rotational attachment of the cutter head 36 and the feed rollers to the carriage assembly 24 is accomplished in a substantially conventional manner. The cutter head 36 includes a replaceable cutting blade 38 removably secured by a retention plate 40 and driven by a motor (not shown) located within the carriage assembly 24. An on/off switch 42 extending from the front face 44 of the carriage assembly 24 controls the supply of electric power to the motor from a power cord (not shown).

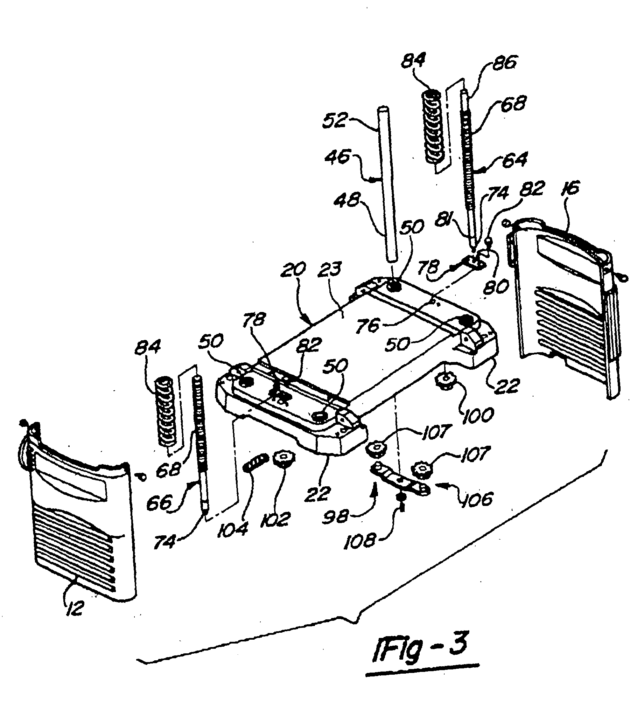

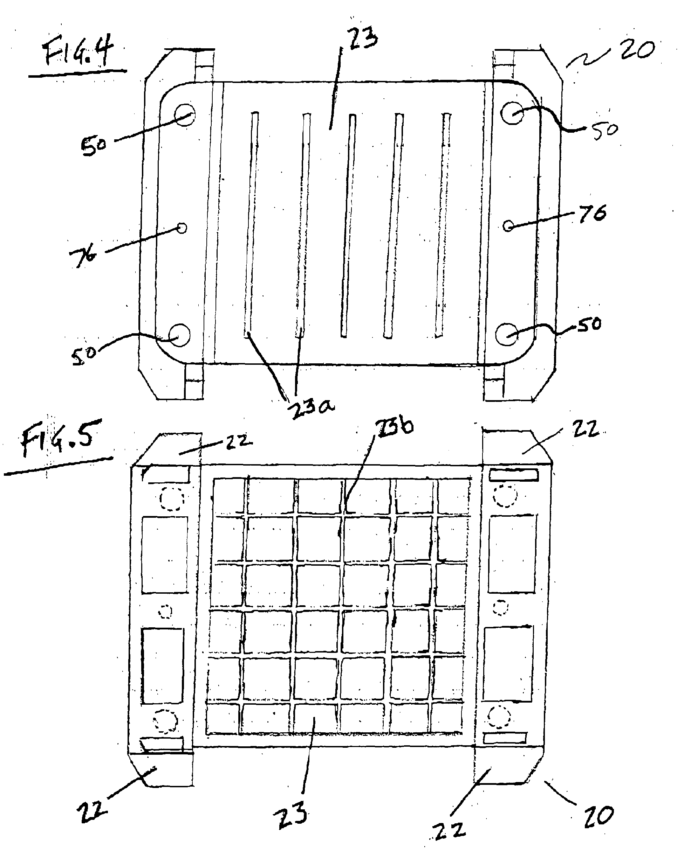

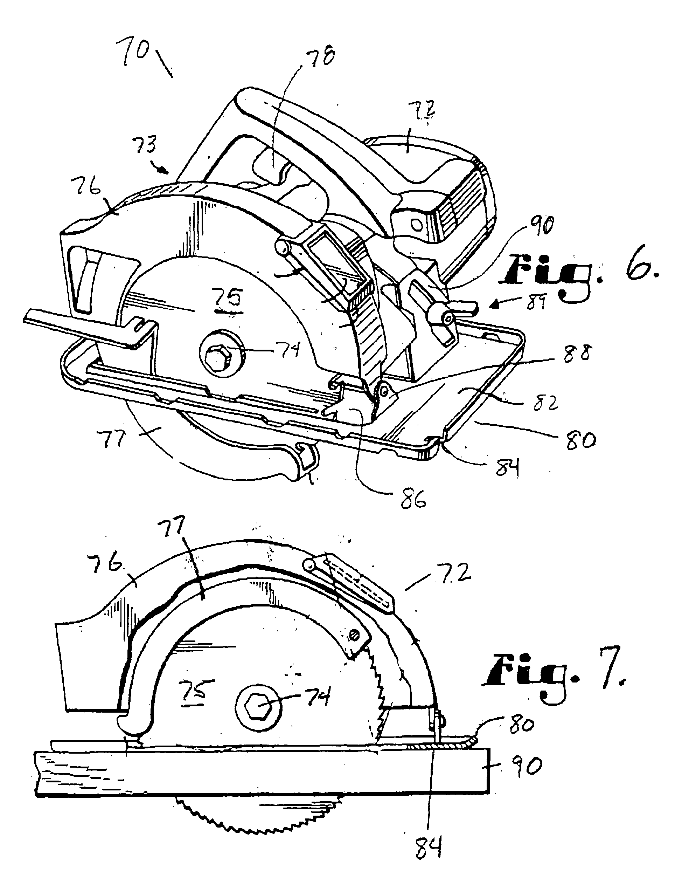

With specific reference to the exploded views of FIGS. 2 and 3, the carriage assembly 24 is shown to be slidably mounted to a plurality of support columns or support posts for bi-directional vertical movement. FIG. 3 illustrates one of the support columns which has been identified with reference numeral 46. Each of the plurality of support columns 46 is generally cylindrical and includes a lower end 48 which engages a circular recess 50 formed in the base 20 of the frame 12. The support columns 46 also include upper ends 52 which engage similar recesses (not show) formed in the underside of the top 18. Threaded fasteners 54 pass through the apertures 56 in the top 18 and base 20 and engage tapped holes (not shown) in the upper and lower ends 48 and 52 of the support columns 46. In the embodiment illustrated, four support columns 46 support the carriage assembly 24. The carriage assembly 24 may selectively be translated upward or downward along a path of travel and is guided by integrally formed apertures 58 located in the four corners of the casting 26 of the carriage assembly 24.

With means that are not the subject of the present invention, the carriage assembly 24 may be vertically adjusted relative to the support platen 23. The vertical adjustment of the of the carriage assembly 24 relative to the support platen 23 serves to select the depth of cut of the workpiece 30 by selectively moving the cutting blade vertically relative to the workpiece 30. An arrangement for translating the carriage assembly 24 is described in further detail in U.S. Serial No. 08/659,685, filed June 5, 1996 and entitled "Apparatus for Adjusting the Relative Positions of Two Components of a Power Tool". U.S. Serial No. 08/659,685 is incorporated by reference as if fully set forth herein.

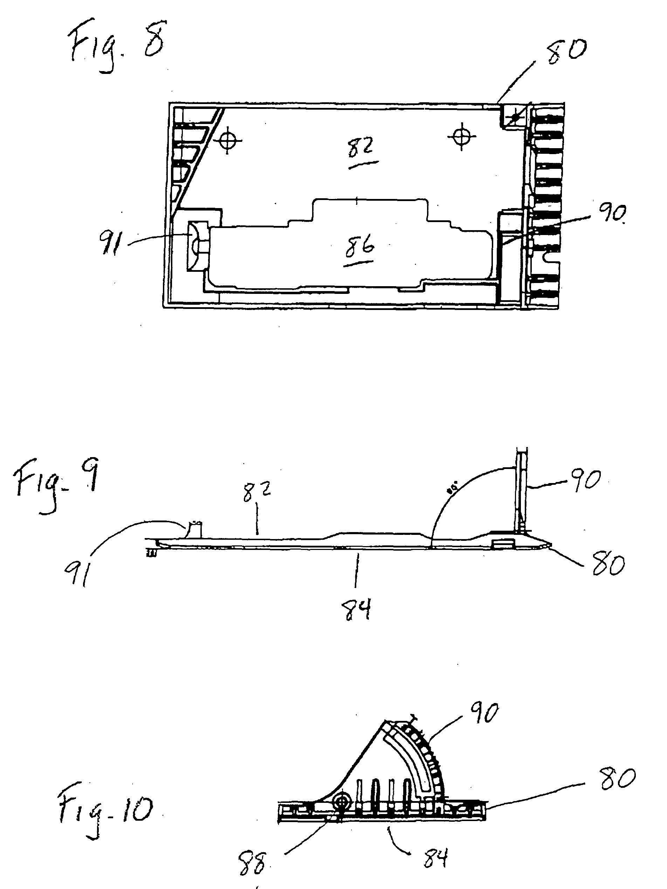

According to the present invention, base 20 and support platen 23, as well as feed tables 36 and 38, are constructed of a light weight fiber reinforced composite material. A fiber reinforced composite material is that constructed of a matrix material reinforced by a fibrous material. For example, the subject platen may be manufactured using a glass fiber reinforced vinyl ester thermoset sheet molding compound (SMC). Alternative base resins include epoxy, polyester, phenolic, polyurethane and polybutadiene resins. Alternative fiber reinforcements include aramid and carbon fibers. With specific reference to FIGS. 4 and 5, the base 20 and support platen 23 are shown formed according to the present invention as an integral piece. The top of the platen 23 may be formed with integral ribs 23a for supporting the workpiece 30 while reducing the total friction contact area. Similarly, the bottom of platen 23 may be formed with a lattice of stiffeners 23b. The use of fiber reinforced composite materials according to the present invention, and the processes for manufacturing with such materials, are particularly suited to the production of complex forms like that of the integral base 20 and platen 23 with their incorporated elements.

The inventors have found that a fiber reinforced composite material platen manufactured according to the present invention has substantial weight savings as compared to a conventional metal platen. The significant weight savings achieved in the platen improve the mobility, ease of use and accuracy of the tool. Furthermore, the structural toughness and rigidity of a fiber reinforced composite platen improves the service life and reduces maintenance/repair costs of a tool incorporating the present invention relative to a tool incorporating a heavier metal platen or shoe.

Another embodiment of a fiber reinforced composite material platen according to the present invention is embodied in a circular saw. As shown in FIGS. 6 and 7, a circular saw is designated generally by 70. Saw 70 comprises a housing 72, an arbor 74 and a circular saw blade 75 detachably secured to the arbor 74 in the known manner. The operational components of the circular saw are contained in a housing 72, which also includes upper blade guard 76 and lower blade guard 77. FIG. 6 shows the lower blade guard 77 in the fully extended position. FIG. 7 shows the lower blade guard 77 in the fully retracted position. For illustrative purposes, in FIG. 7, the right half of the upper guard 76 has been removed and a portion of shoe 80 has been broken away.

The housing 72 is formed with a rear handle 73 from which extends an electric cable (not shown). An on/off trigger switch 78 is provided in the upper part of the closed handle 73 which is shaped to enable the handle 73 to be conveniently and securely gripped by an operator's hand.

Mounted below the housing 72 is a platen or shoe 80 for supporting the saw in sliding engagement with workpiece 100. Shoe 80 is attached to the housing 72 and has an upper surface 82, a lower surface 84 and defines an opening 86 through which the saw blade 75 can extend. Preferably, shoe 80 is pivotably attached to the housing 72 for movement about an axis parallel to the arbor 74 by a pivot (not shown) located at the rear of housing 72 and attached to the shoe by a pivot foundation 91. The rear pivot permits the blade 75 to be adjusted for depth of cut through opening 86 and relative to the lower shoe surface 84 in accordance with well known principles which form no part of the present invention and will not be described in detail.

Also, for bevel angle adjustment, shoe 80 is pivotally attached for movement about an axis perpendicular to the arbor 74 by a pivot 88 located at the front of the housing. The bevel angle adjustment mechanism 89 includes a quadrant 90 that projects in a plane perpendicular to that of the shoe 80. Further details of the rear pivot and bevel angle adjustment mechanisms, which do not form a part of the present invention, are fully disclosed elsewhere, e.g. in U.S. Pat. No. 4,982,501.

With specific reference to FIGS. 8, 9 and 10, the saw shoe 80 is shown formed according to the present invention as an integral piece of fiber reinforced composite material. The shoe 80 may be formed with an integral bevel angle adjustment quadrant 90, pivot 88, and pivot foundation 91 for movement relative to the housing 72 and blade 75. The use of composite materials according to the present invention, and the processes for manufacturing with such materials, are particularly suited to the production of complex forms like that of the saw shoe 80 with integrally incorporated elements.

The inventors have found that a composite material shoe manufactured according to the present invention has particular advantages for hand portable power tools, like the circular saw. The shoes of such saws are subject to frequent drops and shocks. When made of metal they are prone to bend under heavy impact, and if made of plastic they may crack. A bent or cracked shoe adversely effects the accuracy and therefore utility of the saw. In contrast, a shoe made of fiber reinforced composite material may crumble at the point of impact, but it will not bend in a way that interferes with smooth even sliding over the workpiece. Additionally, such crumbling deformation as may occur can be quickly cleaned up with a rasp or file. Moreover, the weight saving of a composite shoe, as compared to a conventional metal shoe, reduces operator fatigue and enhances operator accuracy.

While the above description constitutes alternative embodiments of the present invention, it will be appreciated that the invention is susceptible to modification, variation, and change without departing from the proper scope or fair meaning of the present invention. In this regard, while the various features of the present invention have been shown and described in connection with a portable wood planer and a circular saw, it will be appreciated by those skilled in that art that platens made of fiber reinforced composite materials are suitable in connection with other woodworking power tools. For example, many of the features may be readily modified for use with a jig saw or scroll saw.

## Claims

1. A platen for supporting a wooden workpiece relative to cutting heads of a planing machine, said platen having an upper surface and a lower surface and said platen being integrally composed of a fiber reinforced composite material.

2. A platen for supporting a wooden workpiece relative to blade of a sawing apparatus, said platen having an upper surface and a lower surface and said platen being integrally composed of a fiber reinforced composite material

3. The platen recited in claim 1 wherein said fiber reinforced composite material comprises a thermoset resin with fiber reinforcement.

4. The platen recited in claim 1 wherein said fiber reinforced composite material comprises a glass fiber reinforced vinyl ester thermoset sheet molding compound.

5. The platen recited in claim 1 wherein said fiber reinforced composite material comprises a temperature-cured polymer material derived from a catalyzable resin.

6. The platen recited in claim 3 wherein said thermoset resin comprises one of an epoxy, polyester, phenolic, polyurethane and polybutadiene resins.

7. The platen recited in claim 3 wherein said fiber reinforcement is one of an aramid and carbon fibers.

8. The platen recited in claim 1 further including integral friction reducing ribs formed of said fiber reinforced composite material.

9. The platen recited in claim 1 further including integral structural stiffeners formed of said fiber reinforced composite material.

10. A power planer machine including a platen wherein the platen is integrally formed of a fiber reinforced composite material.

11. The power planer machine recited in claim 10 wherein said fiber reinforced composite material comprises a thermoset resin with fiber reinforcement.

12. The power planer machine recited in claim 10 further including a feed table and wherein the feed table is integrally formed of a fiber reinforced composite material.

13. A shoe for supporting a hand held power tool in slidable engagement with a wooden workpiece, said shoe having an upper surface and a lower surface and said shoe being integrally composed of a fiber reinforced composite material.

14. The shoe recited in claim 13 wherein said fiber reinforced composite material comprises a thermoset resin with fiber reinforcement.

15. The shoe recited in claim 13 wherein said fiber reinforced composite material comprises a glass fiber reinforced vinyl ester thermoset sheet molding compound.

16. The shoe recited in claim 13 wherein said fiber reinforced composite material comprises a temperature-cured polymer material derived from a catalyzable resin.

17. The shoe recited in claim 14 wherein said thermoset resin comprises one of an epoxy, polyester, phenolic, polyurethane and polybutadiene resins.

18. The shoe recited in claim 14 wherein said fiber reinforcement comprises one of an aramid and carbon fibers.

19. A circular saw for cutting a workpiece, the circular saw including a housing and a shoe connected to the housing and engageable with the workpiece, wherein the shoe is integrally formed of a fiber reinforced composite material.

20. The circular saw recited in claim 19 wherein said fiber reinforced composite material comprises a thermoset resin with fiber reinforcement.

21. The circular saw recited in claim 19 wherein the shoe integrally includes a bevel angle adjustment mechanism.

22. The circular saw recited in claim 19 wherein the shoe integrally includes a pivot foundation.

23. The circular saw recited in claim 19 wherein the shoe integrally includes a pivot.
